Europäisches Patentamt

European Patent Office

Office européen des brevets

(19)

(11) **EP 0 882 244 B1**

(12) **EUROPÄISCHE PATENTSCHRIFT**

(45) Veröffentlichungstag und Bekanntmachung des Hinweises auf die Patenterteilung:
**28.05.2003 Patentblatt 2003/22**

(51) Int Cl.⁷: **G01S 7/28**, G01S 7/52, H01Q 15/02

(21) Anmeldenummer: **97951196.1**

(22) Anmeldetag: **14.11.1997**

(86) Internationale Anmeldenummer:
**PCT/EP97/06352**

(87) Internationale Veröffentlichungsnummer:
**WO 98/023970 (04.06.1998 Gazette 1998/22)**

(54) **VERFAHREN ZUR RICHTSTRAHLBILDUNG IN PEILANLAGEN**

METHOD FOR BEAM FORMING IN DIRECTION FINDER SYSTEMS

PROCEDE DE FORMATION DE FAISCEAU HERTZIEN DANS DES SYSTEMES DE REPERAGE

(84) Benannte Vertragsstaaten:
**DE FR GB IT**

(30) Priorität: **22.11.1996 DE 19648327**

(43) Veröffentlichungstag der Anmeldung:
**09.12.1998 Patentblatt 1998/50**

(73) Patentinhaber: **L-3 Communications ELAC Nautik GmbH**
**24118 Kiel (DE)**

(72) Erfinder:
• SCHLIETER, Heiko
D-24161 Altenholz (DE)
• EIGENBROD, Holger
D-24119 Kronshagen (DE)

(74) Vertreter: **Rentzsch, Heinz, Dipl.-Ing.**
**Schönbornring 1**
**63263 Neu-Isenburg (DE)**

(56) Entgegenhaltungen:
EP-A- 0 540 249      EP-A- 0 542 440
EP-A- 0 643 439      US-A- 5 450 089

**Beschreibung**

Die Erfindung befaßt sich mit der Richtstrahlbildung (beam forming) in Peil-, Ortungs- und Vermessungsanlagen und kann sowohl bei der Anwendung akustischer als auch elektromagnetischer Wellen einschließlich Lichtwellen zum Einsatz kommen. Ziel der Erfindung ist eine stärkere Bündelung des Richtstrahls sowie eine erhöhte Nebenzipfelunterdrückung des Richtdiagramms. Hierdurch läßt sich das Auflösungsvermögen solcher Anlagen verbessern.

Bei herkömmlichen Peilanlagen ist die kleinste erzielbare Strahlbreite und damit die Auflösung außer von der Wellenlänge und der Wellenausbreitungsgeschwindigkeit im Medium in erster Linie von den geometrischen Abmessungen der Empfangs- bzw. Sendeanordnung, der sogenannten Apertur, abhängig. Je kürzer die Wellenlänge ist und je größer die Antennenabmessungen sind, umso schärfer läßt sich der Strahl bündeln. Ist die Antenne aus mehreren Einzelwandlern aufgebaut, so läßt sich durch phasenversetzte Ansteuerung bzw. Abtastung nicht nur die Hauptrichtung des Antennendiagramms schwenken, sondern durch Staffelung auch die Strahlbreite und die Nebenpegelunterdrückung in gewissem Umfang beeinflussen.

Aus DE 42 09 351 C2 sowie dem Buch "Sekundär-Radar" von P. Honold, Siemens AG, 1971 S. 45 bis 48 ist es bekannt, durch Bilden der Differenz zwischen dem Summendiagramm zweier eng benachbarter Antennen und dem entsprechenden Differenzdiagramm eine höhere Bündelung des Antennendiagramms zu erzielen.

Weiterhin wird in dem Buch "Introduction to monopulse" von D.R. Rhodes, McGraw-Hill Book Company Inc., New York 1959 ein Verfahren nach dem Gattungsbegriff der unabhängigen Ansprüche beschrieben, wobei das Summendiagramm durch Aufsummieren aller Wandlersignale und anschließende Betragsbildung erzeugt wird. Durch die nachfolgende Differenzbildung aus diesem Summendiagramm und dem Differenzdiagramm wird zwar die Hauptkeule schmaler, aber es treten im Winkelabstand von 10° zu beiden Seiten der zentralen Hauptkeule starke erste Nebenkeulen auf.

Bei einem in EP 0540 249 A1 beschriebenen Antennensignal-Verarbeitungsverfahren werden Summen- und Differenzsignale zweier Antennen gebildet. Ist das Summensignal kleiner oder gleich dem Differenzsignal, so liefert der Detektor ein Ausgangssignal Null. Andernfalls wird das Ausgangssignal durch Subtrahieren des Differenzsignals vom Summensignal gebildet.

In EP 0643 439 A1 werden Summensignal und Differenzsignal zweier gleicher Radarantennen jeweils zweimal differenziert. Solange die hierbei gebildete zweite Ableitung des Summensignals kleiner als eine vorgegebene positive Zahl und die zweite Ableitung des Differenzsignals größer als eine vorgegebene negative Zahl ist, bildet das Summensignal das Ausgangssignal. Andernfalls ist das Ausgangssignal gleich Null.

EP 0542 440 A1 beschreibt eine räumliche Strahlbündelung in zwei senkrecht zueinander stehenden Ebenen durch Bilden von Summen- und Differenzsignalen sowie anschließendes Subtrahieren der Differenzsignale von den Summensignalen. Schließlich zeigt US 5 450 089 die Verwendung eines "Pseuso-Differenzkanals" für die Bildung der Differenz aus Summen- und Differenzsignal. Dieser Pseudo-Differenzkanal liefert einen Schwellwert. Übersteigt das Summensignal den Schwellwert, so bildet es das Ausgangssignal.

Mit der in den unabhängigen Ansprüchen 1 und 2 gekennzeichneten Erfindung gelingt es, ohne zusätzlichen Antennenaufwand, allein durch eine neuartige Signalverarbeitung, die Strahlbündelung zu erhöhen und die Nebenzipfel stärker zu unterdrücken. Das gemeinsame Prinzip aller Ausführungsformen besteht darin, daß die Apertur in zwei vorzugsweise gleiche Wandler oder Wandlergruppen aufgeteilt wird und entweder das Zweifache des Betrags des Peilsignals einer der beiden Wandlergruppen oder die Summe der Beträge der Peilsignale beider Wandlergruppen zum Betrag eines aus den beiden Peilsignalen ermittelten Differenzsignals z.B. durch Verhältnis- oder Differenzbildung in Beziehung gesetzt wird. Dabei besteht jede Wandlergruppe im einfachsten Fall aus je einem Wandler. Die Erfindung ist aber auch bei Wandlerzeilen, ebenen oder gekrümmten Wandlerarrays, Kreisbasen oder dergleichen anwendbar. Vorteilhafte Ausgestaltungen und Einzelheiten der Erfindung ergeben sich aus den Unteransprüchen.

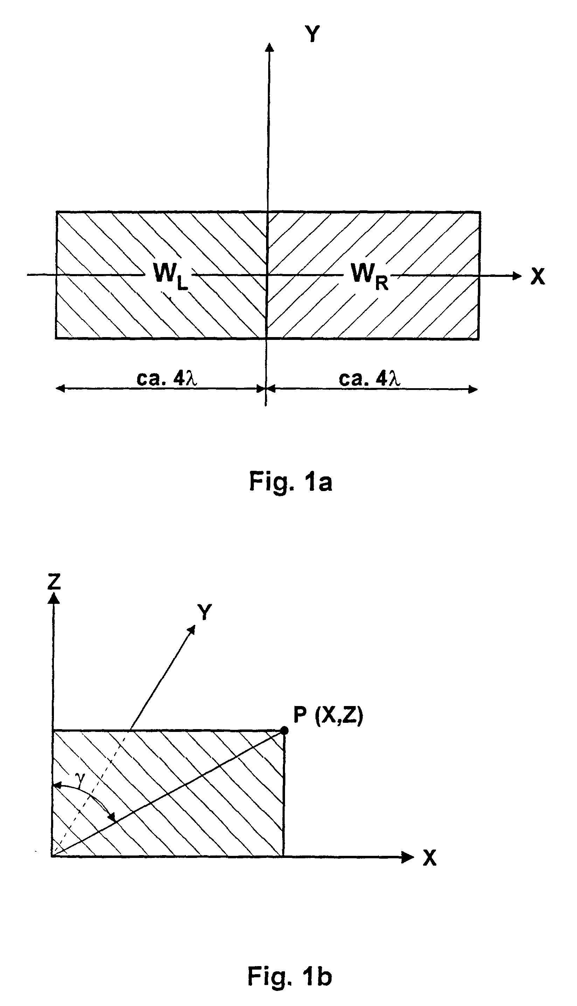

Die Erfindung wird nachfolgend anhand in den Zeichnungen wiedergegebener Ausführungsbeispiele und Diagramme erläutert. Zur Beschreibung des Prinzips ist in Fig. 1a ein aus einem linken und einem rechten Halbwandler $W_L$ bzw. $W_R$ bestehender elektroakustischer Wandler in Draufsicht dargestellt, wie er in Wasserschall-Ortungsanlagen Anwendung findet. Jeder Halbwandler hat beispielsweise eine Breitenausdehnung von $4\lambda$ ( $\lambda$ = Schallwellenlänge im Wasser). Er kann aus mehreren gleichphasig oder phasenversetzt erregten bzw. abgetasteten Einzelwandlern bestehen. Die Hauptstrahlrichtung z (vgl. Fig. 1b) steht senkrecht auf den in der xy-Ebene dargestellten Wandlerstrahlflächen. In Fig.1b ist das Koordinatensystem dargestellt, in welchem die Aufpunkte P(x,y,$\gamma$) in der zx-Ebene angegeben werden.

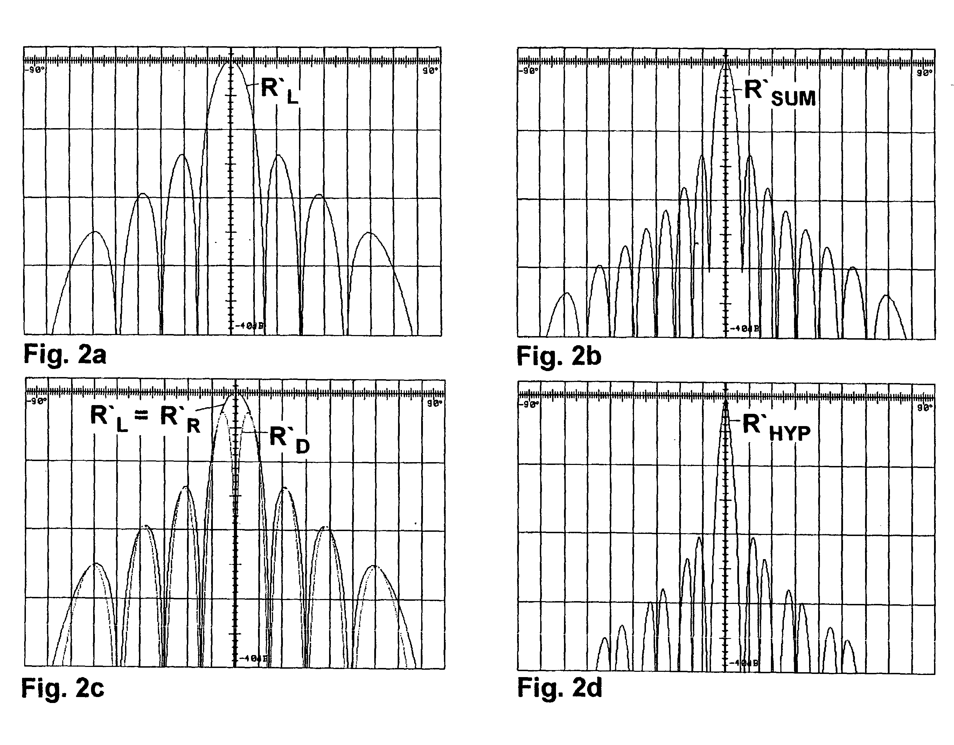

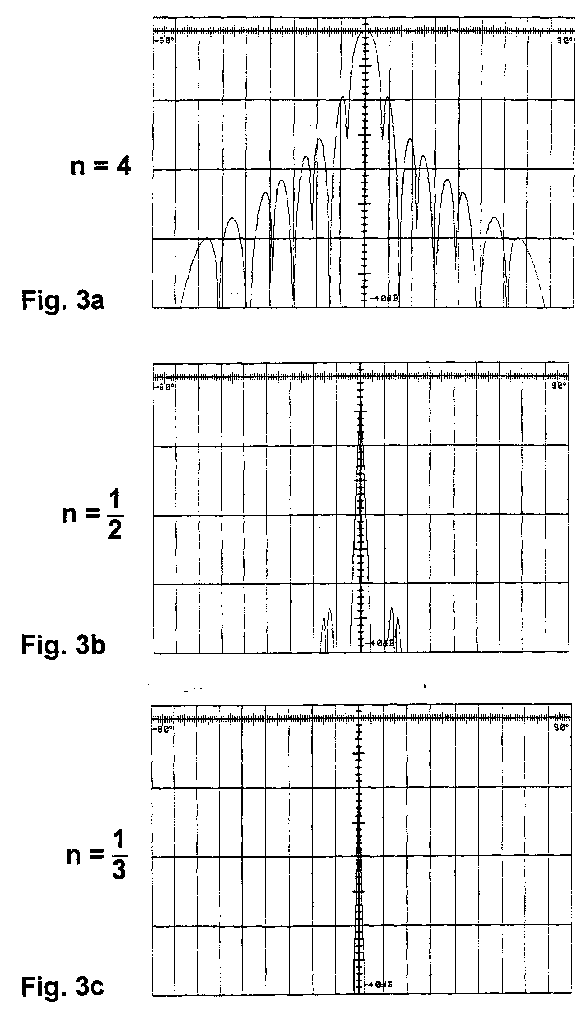

Fig.2a zeigt die normierte Fernfeld-Richtcharakteristik eines der beiden Halbwandler $W_L$ oder $W_R$ in der zx-Ebene, d.h. das komplexe Empfangssignal $\Re_L$ (oder $\Re_R$ ) in Abhängigkeit vom Aufpunktwinkel $\gamma$, jedoch wie üblich - und auch in den folgenden Richtcharakteristiken gemäß den Fig. 2 und 3 - in logarithmischer Dehnung und normiert auf den größten Wert $\Re_{Lmax}$ nach der Beziehung R'$_L$ = 20 log $|\Re_L : \Re_{Lmax}|$, so daß der Maximalwert der normierten logarithmierten Größe R'$_L$ grundsätzlich in der Hauptrichtung der Richtcharakteristik 0 dB beträgt. Die Fernfeldcharakteristik ist für beide Halbwandler $W_L$ und $W_R$ gleich, weshalb die Richtcharakteristik von Fig.2a auch für den rechten Halbwandler $W_R$ gilt, d.h. $R'_L = R'_R$.

Die 3dB- Bündelungsbreite beträgt 12,6°.

In Fig.2b ist der Stand der Technik, nämlich die Bildung einer Summen-Richtcharakteristik $R'_{Sum}$ des Gesamtwandlers durch phasenrichtige Addition der Signale $\Re_L$ und $\Re_R$ der beiden Halbwandler $W_L$ und $W_R$ gezeigt, d. h. $\Re_{Sum} = \Re_L + \Re_R$ bzw. $R'_{Sum} = 20 \log | \Re_{Sum} : \Re_{Sum\,max} |$.

Man erkennt, daß mit der bekannten Summen-Richtcharakteristik eine 3dB-Bündelungsbreite von 6,3° und eine Nebenpegelunterdrückung von etwa 13,4dB erzielbar ist.

Bildet man mit einer Wandleranordnung nach Fig. 1a aus den Empfangssignalen der beiden Wandler die Signaldifferenz $\Re_D = \Re_L - \Re_R$, so erhält man die in Fig.2c gestrichelt eingezeichnete Richtcharakteristik $R'_D = 20 \log | \Re_D : 2 \Re_{Lmax} |$ mit einer scharfen Quasi-Nullstelle in Vorwärtsrichtung. Die in Fig.2c ausgezogen eingetragene Linie ist das Richtdiagramm $R'_L$ bzw. $R'_R$ eines der beiden Einzelwandler $W_L$ bzw. $W_R$. Die Differenz-Richtcharakteristik $R'_D$ in Fig.2c hat für alle Richtungen eines z.B. einfallenden Echosignals Werte, welche kleiner sind als die der Halbwandlercharakteristik $R'_L$ bzw. $R'_R$. Die Nebenzipfel von Differenz- und Halbwandler-Charakteristik weisen fast durchweg in die gleiche Richtung.

Dies läßt erkennen, daß man mit der erfindungsgemäßen Erzeugung eines resultierenden Ausgangssignals $R_{HYP}$ durch Quotientenbildung $2 \cdot | \Re_L | : | \Re_D |$ oder Differenzbildung $2 \cdot | \Re_L | - | \Re_D |$ im Vergleich zur bekannten Summencharakteristik entsprechend Fig.2b zu einer wesentlich stärkeren Bündelung und zugleich zu einer verbesserten Nebenpegelunterdrückung kommt. Der Faktor 2 vor $| \Re_L |$ berücksichtigt, daß die in Fig.2c gestrichelt eingezeichnete Differenz-Richtcharakteristik auf das Doppelte des Maximums der Halbwandlerkurve $\Re_L$ bzw. $\Re_R$ normiert wurde.

Wegen der Identität $| \Re_L | \equiv | \Re_R |$ im Fernfeld kann man zur Quotienten- bzw. Differenzbildung anstelle des zweifachen Betrags des Halbwandlersignals $\Re_L$ bzw. $\Re_R$ die Betragssumme beider Halbwandlersignale $R_{BSum} = | \Re_L | + | \Re_R |$ verwenden, also den Quotienten $R_{BSum} : | \Re_D |$ oder die Differenz $R_{BSum} - | \Re_D |$ bilden. Zu beachten ist, daß eine Quotienten- bzw. Differenzbildung der Beträge der Halbwandlersignale und der Halbwandlersignaldifferenz selbst erfolgt, und nicht der in Fig.2a und 2c dargestellten normierten logarithmierten Werte.

Da für die Hauptpeilrichtung, also an der Nullstelle des Differenzsignals $\Re_D$, bei einer Quotientenbildung das Ausgangssignal $R_{BSum} : | \Re_D |$ oder $2 | \Re_L | : | \Re_D |$ wegen der Division durch in der Praxis auftretende Stör- und Rauschspannungen erheblich schwanken dürfte, wird im folgenden der Ausführungsform mit Differenzbildung

$$(1) \qquad R_{HYP} = 2 \cdot \left| \Re_L \right| - \left| \Re_D \right| \ \text{bzw.}$$

$$(2) \qquad R_{HYP} = R_{BSum} - \left| \Re_D \right| = \left| \Re_L \right| + \left| \Re_R \right| - \left| \Re_L - \Re_R \right|$$

der Vorzug gegeben.

Das erwähnte Nullstellenproblem läßt sich allerdings lösen, wenn man das aus den beiden Halbwandlersignalen gebildete Differenzsignal $| \Re_D |$ an der Nullstelle in Vorwärtsrichtung nicht unter einen vorgegebenen Mindestpegel absinken läßt.

Fig.2d gibt eine im folgenden Hypercharakteristik $R'_{HYP}$ genannte Richtcharakteristik wieder, welche durch Differenzbildung aus der Betragssumme $R_{BSum}$ der Signale der beiden Einzelwandler einerseits und dem Betrag der Signaldifferenz $\Re_D$ andererseits hervorgegangen ist. Erzielt wird hierdurch eine gegenüber der Summencharakteristik $R'_{Sum}$ nach Fig.2b von 6,2° um den Faktor 2,4 verschmälerte 3dB-Bündelungsbreite von nunmehr etwa 2,6° sowie eine noch weiter verbesserte Nebenzipfelunterdrückung. Dabei beträgt die Nebenzipfelsunterdrückung des stärksten verbliebenen Nebenzipfels etwa 20,5dB und ist damit im Vergleich zu der des Summensignals um 7dB besser.

Die Bildung der resultierenden Hypercharakteristik $R'_{HYP}$ gemäß Fig.2d erfolgt durch komplexe Signaladdition und -subtraktion nach folgenden Gleichungen:

$$(3) \qquad R'_{HYP(\gamma)} = 20 \log [R_{HYP(\gamma)} : R_{HYP\,max(\gamma)}],$$

wobei

$$(4) \qquad R_{HYP(\gamma)} = \left| \Re_L(\gamma) \right| + \left| \Re_R(\gamma) \right| - \left| \Re_D(\gamma) \right|$$

mit

$R_{HYP}(\gamma)$: Wert der Hypercharakteristik für den Aufpunktwinkel $\gamma$

$\mathfrak{R}_L(\gamma)$, $\mathfrak{R}_R(\gamma)$: Komplexer Richtcharakteristik- oder Empfangssignalwert des linken bzw. rechten Einzelwandlers für den Aufpunktwinkel $\gamma$

$\mathfrak{R}_D(\gamma) = \mathfrak{R}_L(\gamma) - \mathfrak{R}_R(\gamma)$: Komplexer Wert der Signaldifferenz als Funktion von $\gamma$

Da $\mathfrak{R}_L(\gamma)$ und $\mathfrak{R}_R(\gamma)$ konjugiert komplex sind, gilt $|\mathfrak{R}_L(\gamma)| \equiv |\mathfrak{R}_R(\gamma)|$ und somit beispielsweise auch

$$(5) \qquad R_{HYP}(\gamma) = 2\,|\mathfrak{R}_L(\gamma)| - |\mathfrak{R}_D(\gamma)| = 2\,|\mathfrak{R}_R(\gamma)| - |\mathfrak{R}_D(\gamma)|$$

An sich kann die Hypercharakteristik mit Gleichung (4) oder (5) berechnet werden und führt zur gleichen Kennlinie. Bei Ortungsaufgaben in der Praxis wird man vorteilhaft die Empfangssignale der beiden Wandler oder Wandlergruppen $W_L$ und $W_R$ nach Gl.(4) verarbeiten. weil sich dann evtl. vorhandene Unterschiede in den akustischen Eigenschaften der beiden Einzelwandler oder Wandlergruppen sowie mögliche Unterschiede in der Störbeaufschlagung beider Wandler besser gegeneinander aufheben oder herausmitteln lassen. Die Richtcharakteristik nach Fig.2d wurde nach Gl.(4) erzeugt und führt wie erwähnt gegenüber der bekannten Summencharakteristik von Fig.2b zu einer Verbesserung der 3dB-Bündelbreite um den Faktor 2,4 und der Nebenzipfelunterdrückung des stärksten Nebenzipfels um7dB. Die in Gl.(4) aufgeführten Beträge entsprechen den Signalamplituden an den beiden Wandlern und sind dem an den Wandlern auftretenden Schalldruck proportional. Die berechnete und in Fig.2d dargestellte Größe $R'_{Hyp}$ ist die wie üblich logarithmisch aufgetragene Signalamplitude.

Die nach dem bisher beschriebenen Prinzip gebildete Richtcharakteristik läßt sich in Weiterbildung der Erfindung gezielt weiter verschmälern aber auch verbreitern, wenn die Halbwandlersignale $\mathfrak{R}_L$ und $\mathfrak{R}_R$ nach der folgenden allgemeinen Gleichung verarbeitet werden:

$$(6) \qquad R_{HYP}(\gamma, n) = [\,(\,|\mathfrak{R}_L| + |\mathfrak{R}_R|\,)^n - |\mathfrak{R}_L - \mathfrak{R}_R|^n\,]^{1/n} \quad \text{mit } 0 < n < \infty \text{ und } |\mathfrak{R}_L| \equiv |\mathfrak{R}_R|.$$

Dabei ist $(|\mathfrak{R}_L| + |\mathfrak{R}_R|)^n = (R_{Bsum})^n$

Für n = 1 stimmen die Gleichungen (4) und (6) überein, d.h. es erfolgt eine Differenzbildung der dem Schalldruck entsprechenden Größen. Mit n = 2 erhält man, wie leicht erkennbar ist, die Quadratwurzel der Differenz der Quadrate, also wieder eine der Signalamplitude entsprechende Größe $R_{HYP\,(\gamma,2)}$, die mathematisch nachweisbar identisch mit dem Summensignal in Fig.2b ist gemäß $R_{HYP\,(\gamma,2)} \equiv |\mathfrak{R}_{Sum}|$. Wählt man hingegen n < 1, z.B. n = ½, so lautet Gl.(6) dann :

$$(6a) \qquad R_{HYP}(\gamma, ½) = [\{|\mathfrak{R}_L| + |\mathfrak{R}_R|\}^{1/2} - \{|\mathfrak{R}_L - \mathfrak{R}_R|\}^{1/2}]^2 \;,$$

und man erhält eine noch schmaler gebündelte Hauptkeule der Hypercharakteristik und noch weiter abgesenkte Nebenzipfel. Nach Gl.(6) bleibt $R_{HYP}(\gamma,n)$ immer eine der Signalamplitude entsprechende Größe und ergibt sich nicht etwa durch eine reine Dehnung der Skala wie bei einem Quadrieren der Summencharakteristik $|\mathfrak{R}_{Sum}|$.

In den Fig. 3a bis 3c sind nach Gl.(6) berechnete Richtcharakteristiken für verschiedene Wert des Parameters n, nämlich für n = 4, n = ½ und n = 1/3, wiedergegeben. Vergleicht man das Diagramm nach Fig.3a für n = 4 mit der Kurve nach Fig. 2b für n = 2 (Summencharakteristik der beiden Wandler), so zeigt sich eine deutliche Verbreiterung der Hauptkeule auf eine 3dB-Bündelbreite von 9,1° und eine Erhöhung der Nebenzipfel. Mit wachsendem n nimmt also die Bündelbreite zu. Eine Wahl von n > 2 bringt also für die meisten Anwendungsfälle eher Nachteile als Vorteile. Umgekehrt wird die Hauptstrahlbreite verringert, wenn man n < 1 wählt. So zeigt Fig.3b mit n = ½ gegenüber Fig.2d mit n = 1 eine Verringerung der 3dB-Bündelbreite von 2,6° auf nur noch 0,23° und eine Nebenzipfeldämpfung von 33,5dB. Arbeitet man mit n = 1/3, so beträgt die 3dB-Bündelbreite der Hypercharakteristik in Fig.3c nur noch 0,02° und die Dämpfung des stärksten Nebenzipfels etwa 46dB.

Bei Untersuchungen, inwieweit das erfindungsgemäße Verfahren für Fertigungstoleranzen der Wandler empfindlicher ist als die herkömmliche Bildung der Summe $\mathfrak{R}_{Sum}$, wurde festgestellt, daß sich beispielsweise statistisch verteilte Wandlertoleranzen mit ± 10° Phasenschwankung und ± 2dB Empfindlichkeitsschwankung für die Fälle n = 1 und n = ½ nur gering auswirken und die Vorteile der Erfindung keineswegs in Frage stellen. Diese Toleranzrechnungen wurden für die in Fig. 1a skizzierte Anordnung mit zwei gleichen Wandlergruppen aus je 8 parallelgeschalteten Wandlern durchgeführt. Die Erfindung ist jedoch gleichermaßen bei Wandlerarrays vorteilhaft anwendbar, und zwar auch beim phasen- oder laufzeitgesteuerten Schwenken der Hauptkeule sowie beim Einsatz sog. Shadingfunktionen. Voraussetzung ist die Aufteilung des Arrays in zwei mittensymetrische Wandlergruppen, deren Richtcharakteristiken sich auch in der Praxis nicht zu sehr unterscheiden dürfen. Auch bei räumlichen Wandlerarrays, insbesondere Kreisbasen, kann die Erfindung nutzbringend eingesetzt werden.

Bei der Bildung des Summensignals $R_{BSum}$ war bisher davon ausgegangen worden, daß beide Einzelwandlersignale $\mathfrak{R}_L$ und $\mathfrak{R}_R$ gleichgewichtig in die Summenbildung eingehen. Bei Identität der Betragssignale $|\mathfrak{R}_L| \equiv |\mathfrak{R}_R|$ kann das Summensignal jedoch auch nach der allgemeineren Beziehung

$$(7) \qquad R_{BSum} \;=\; a \cdot |\mathfrak{R}_L| \;+\; b \cdot |\mathfrak{R}_R| \quad \text{mit } a + b = 2$$

gebildet werden.

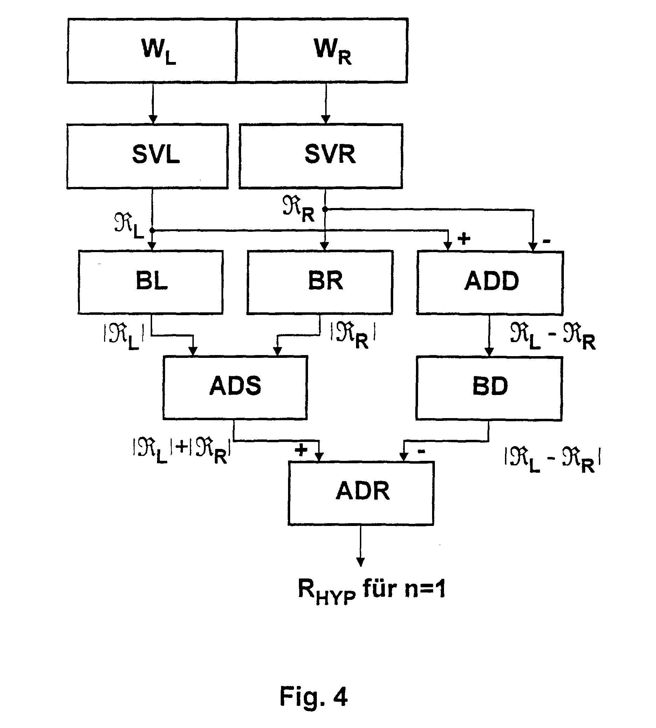

Ein Blockschaltbild einer Schaltungs- oder Rechenanordnung für die Signalverarbeitung nach Gl.(4) (bzw. Gl.(6) mit n = 1) ist in Fig.4 wiedergegeben. Die linken und rechten Einzelwandler $W_L$ und $W_R$ können aus einer Vielzahl von Wandlerelementen bestehen, die intern parallelgeschaltet sind. An die linken und rechten Wandler $W_L$ und $W_R$ sind über linke und rechte Signalvorverarbeitungseinrichtungen SVL bzw. SVR einerseits die linken und rechten Betragbildner BL bzw. BR und andererseits der differenzbildende Addierer ADD angeschlossen. Damit stehen die Signale $|\mathfrak{R}_L|$ und $|\mathfrak{R}_R|$ sowie $\mathfrak{R}_L$-$\mathfrak{R}_R$ zur Verfügung. Die beiden erstgenannten Signale werden dem summenbildenden Addierer ADS und das letztgenannte Differenzsignal wird dem Betragbildner BD zugeleitet. Damit erhält man die Betragssumme $R_{BSum} = |\mathfrak{R}_L|+|\mathfrak{R}_R|$ der beiden Halbwandlersignale sowie den Betrag $|\mathfrak{R}_D| = |\mathfrak{R}_L$-$\mathfrak{R}_R|$ des Differenzsignals. Diese beiden Betragssignale gelangen zum differenzbildenden Addierer ADR, welcher das resultierende Ausgangssignal $R_{HYP}$ für n = 1 liefert. Die herkömmliche Summencharakteristik $|\mathfrak{R}_{Sum}|$ bekäme man, wenn man im rechten Addierer ADD statt der Differenz $\mathfrak{R}_L$-$\mathfrak{R}_R$ die Summe $\mathfrak{R}_L$+$\mathfrak{R}_R$ und aus dieser Summe anschließend den Betrag bildet.

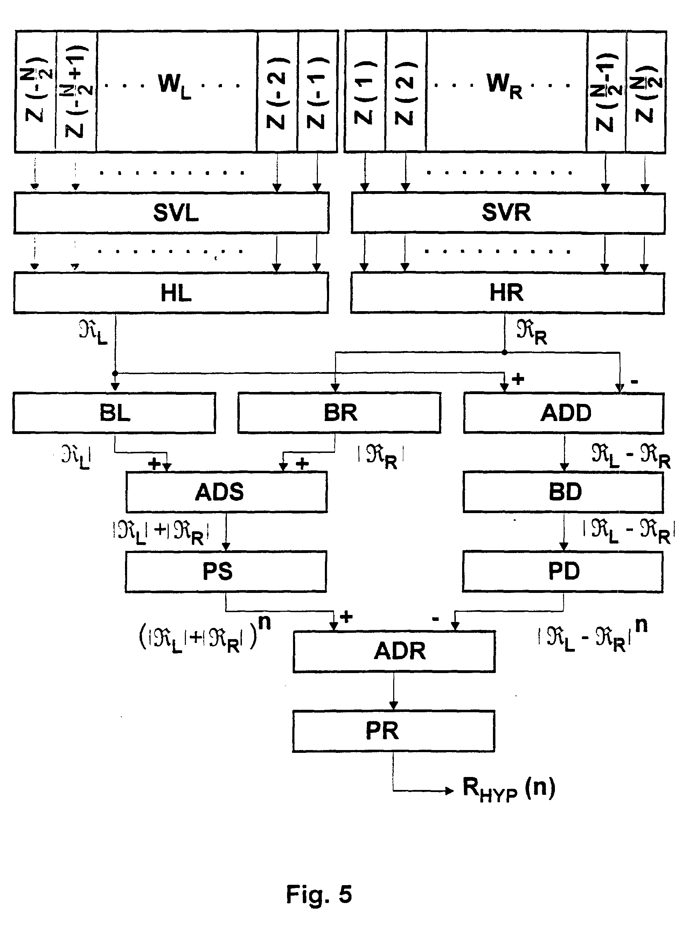

Fig.5 zeigt in Form eines Blockschaltbilds die Signalverarbeitung nach Gl.(6), wobei die beiden Wandlerhälften jeweils aus einer gleichen Anzahl von Wandlerelementengruppen oder Wandlerzeilen Z zusammengesetzt sind, deren Ausgangssignale nach geeigneter Signalvorverarbeitung (Verstärkung, Filterung, ggfs. A/D-Umsetzung usw.) in den Vorverarbeitungseinrichtungen SVL und SVR dem linken bzw. rechten Halbrichtstrahlformer HL bzw. HR zugeleitet werden. Deren Ausgangssignale $\mathfrak{R}_L$ und $\mathfrak{R}_R$ werden wie in Fig.4 einerseits den beiden Betragbildnern BL und BR sowie andererseits dem differenzbildenden Addierer ADD zugeführt. An die Ausgänge der Betragbildner BL und BR ist ein summenbildender Addierer ADS und an den Ausgang des differenzbildenden Addierers ADD ein Betragbildner BD für das Differenzsignal angeschlossen. Zwischen deren Ausgang und den differenzbildenden Addierer ADR ist hier jeweils ein Potenzierer PS für das Betrags-Summensignal $(|\mathfrak{R}_L|+|\mathfrak{R}_R|)^n$ und PD für das Betrags-Differenzsignal $|\mathfrak{R}_L$-$\mathfrak{R}_R|^n$ eingeschaltet. An den Addierer ADR schließt sich ein weiterer Potenzierer PR an, der gemäß Gl.(6) die Differenz seiner Eingangssignale mit 1/n potenziert, d.h. die n-te Wurzel zieht und damit das resultierende Ausgangssignal $R_{HYP}$(n) der Hyper-Richtcharakteristik bereitstellt.

Mit den erwähnten Halbrichtstrahlbildnern HL und HR kann in bekannter Weise die Hauptstrahlrichtung geschwenkt bzw. auf eine von der Vorausrichtung abweichende Richtung eingestellt werden. Würde man die von den beiden Halbrichtstrahlbildnern HL, HR erzeugten Signale $\mathfrak{R}_L$ und $\mathfrak{R}_R$ addieren und den Betrag der Summe bilden, erhielte man auch hier die bekannte Summencharakteristik $|\mathfrak{R}_{Sum}|$. Dies bedeutet, daß der Signalverarbeitungsaufwand bis zu dieser Betragsbildung der gleiche ist wie bei einem herkömmlichen Summen-Richtstrahlbildner. Der durch die Erfindung bedingte Zusatzaufwand beschränkt sich folglich auf zwei Betragsbildungen sowie zwei Additionen von zwei Werten und erfordert nur für den Fall von n ≠ 1 drei Potenzieroperationen. Sofern n = 1 ist, entfallen ersichtlich die in Fig.5 eingezeichneten Potenzierer PS für die Summe und PD für die Differenz sowie PR für das Ausgangssignal des Addierers ADR. Die Signalverarbeitung erfolgt bevorzugt digital in einem geeignet programmierten Mikrorechner.

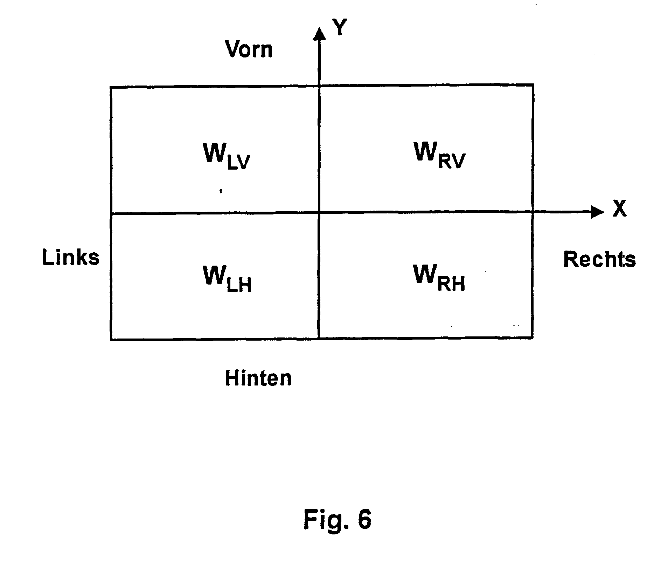

Soll der Richtstrahl gleichzeitig in zwei zueinander senkrechten Ebenen mit der erfindungsgemäßen Signalverarbeitung verbessert, also schärfer gebündelt werden, so wird das Wandlerfeld beispielsweise, wie in Fig.6 gezeigt, in vier Quadranten aufgeteilt, um die Hyper-Richtstrahlbildung sowohl in der xz- als auch in der yz-Ebene vorzunehmen. Für die Hyperstrahlbildung in der xz-Ebene faßt man jeweils die beiden linken und rechten Quadranten $W_{LV}$ und $W_{RV}$ bzw. $W_{LH}$ und $W_{RH}$ zusammen und für die yz-Ebene jeweils die beiden hinteren und vorderen Quadranten $W_{LH}$ und $W_{LV}$ bzw. $W_{RH}$ und $W_{RV}$. Die Vorschriften zur Bildung des resultierenden Richtstrahls lauten dann:

$$(8) \qquad \Re_L = \Re_{LH} + \Re_{LV}$$

$$\Re_R = \Re_{RH} + \Re_{RV}$$

$$\Re_H = \Re_{LH} + \Re_{RH}$$

$$\Re_V = \Re_{LV} + \Re_{RV}$$

Für die Richtcharakteristik in der xz-Ebene ergibt sich entsprechend Gl.(6)

$$(9a) \qquad R_{HYP}\,xz\,(\gamma,n) = [\,(\,|\Re_L| + |\Re_R|\,)^n - |\Re_L - \Re_R|^n\,]^{1/n}$$

und für die yz-Ebene

$$(9b) \qquad R_{HYP}\,yz\,(\gamma,m) = [\,(\,|\Re_H| + |\Re_V|\,)^m - |\Re_H - \Re_V|^m\,]^{1/m}$$

Zur Erzeugung eines in beiden Ebenen schärfer gebündelten Richtstrahls werden die Ergebnisse dieser beiden Gleichungen miteinander in geeigneter Weise verknüpft, z.B. multipliziert und/oder es erfolgt eine Mittelwertbildung. Die unterschiedlichen Potenzen n und m ermöglichen es, die Bündelung des resultierenden Richtstrahls in den beiden senkrecht zueinander stehenden Ebenen unterschiedlich zu gestalten.

Die als Ausführungsbeispiel beschriebene Empfangssignalverarbeitung einer Echolot- oder Sonaranlage läßt erkennen, daß die Erfindung auch bei Peilanlagen, welche mit anderen, z.B. elektromagnetischen Wellen einschließlich Lichtwellen, arbeiten bei entsprechender Ausgestaltung der Vorrichtungen ebenso erfolgreich angewandt werden kann. Die Wandler sind dann beispielsweise durch Antennen bzw. Elementarantennen, z.B. Dipole oder optische Sensoren gebildet. Auch ist die Erfindung keineswegs auf die Empfangssignalverarbeitung beschränkt, sondern kann im Prinzip auch zur Erzielung stark gebündelter Sendestrahlen eingesetzt werden.

**Patentansprüche**

1. Verfahren zur Richtstrahlbildung in Peilanlagen mit zwei gleichen, jeweils mindestens einen Wandler umfassenden Wandlergruppen ($W_L$, $W_R$), wobei in einer elektronischen Signalverarbeitungseinrichtung aus den komplexen Ausgangssignalen ($R_L$, $R_R$) der beiden Wandlergruppen einerseits ein Summensignal und andererseits ein Differenzsignal gebildet und zur Ableitung eines resultierenden Ausgangssignals ($R_{HYP}$) miteinander verknüpft werden, **dadurch gekennzeichnet,daß** in der Signalverarbeitungseinrichtung

   a) aus den komplexen Ausgangssignalen ($\Re_L, \Re_R$) der beiden Wandlergruppen ein komplexes Differenzsignal ($\Re_D = \Re_L - \Re_R$) gebildet wird;
   b) aus den Beträgen ($|\Re_L|$, $|\Re_R|$) der komplexen Wandlergruppen-Ausgangssignale ein Betrags-Summensignal ($R_{BSum}$) nach der Gleichung

$$R_{BSum} = a \cdot |\Re_L| + b \cdot |\Re_R| \qquad \text{mit } a + b = 2 \qquad\qquad (7)$$

   gebildet wird; und
   c) zur Bildung des resultierenden Ausgangssignals ($R_{HYP}$) das Betrags-Summensignal ($R_{BSum}$) durch den Betrag ($|\Re_D|$) des Differenzsignals ($\Re_D$) dividiert wird.

2. Verfahren zur Richtstrahlbildung in Peilanlagen mit zwei gleichen, jeweils mindestens einen Wandler umfassenden Wandlergruppen ($W_L$, $W_R$), wobei in einer elektronischen Signalverarbeitungseinrichtung aus den komplexen Ausgangssignalen ($\Re_L, \Re_R$) der beiden Wandlergruppen einerseits ein Summensignal und andererseits ein Differenzsignal gebildet und zur Ableitung eines resultierenden Ausgangssignals ($R_{HYP}$) miteinander verknüpft werden, **dadurch gekennzeichnet,daß** in der Signalverarbeitungseinrichtung

a) aus den komplexen Ausgangssignalen ($\mathfrak{R}_L$, $\mathfrak{R}_R{}'$) der beiden Wandlergruppen ein komplexes Differenzsignal ($\mathfrak{R}_D = \mathfrak{R}_L - \mathfrak{R}_R{}'$) gebildet wird;

b) aus den Beträgen ($|\mathfrak{R}_L|$, $|\mathfrak{R}_R{}'|$) der komplexen Wandlergruppen-Ausgangssignale ein Betrags-Summensignal ($R_{BSum}$) nach der Gleichung

$$R_{BSum} = a \cdot |\mathfrak{R}_L| + b \cdot |\mathfrak{R}_R| \qquad \text{mit } a + b = 2 \tag{7}$$

gebildet wird; und

c) dass die Ableitung des resultierenden Ausgangssignals ($R_{HYP}$) nach der Gleichung

$$R_{HYP} = [\, (R_{BSum})^n - |\mathfrak{R}_D|^n \,]^{1/n} \qquad \text{mit } 0 < n < \infty \text{ erfolgt.} \tag{6}$$

3. Verfahren nach Anspruch 2, **dadurch gekennzeichnet, daß** $n < 2$, vorzugsweise $n = 1$ oder $n = 1/2$ oder $n = 1/3$ gewählt ist.

4. Verfahren nach Anspruch 2, **dadurch gekennzeichnet, daß** $|\mathfrak{R}_L| \equiv |\mathfrak{R}_R{}'|$ gewählt ist.

5. Verfahren nach Anspruch 1 oder 2, **dadurch gekennzeichnet daß** $a = b = 1$ gewählt ist.

6. Verfahren nach Anspruch 1 oder 2, **dadurch gekennzeichnet, daß** $a = 0$ oder $b = 0$ gewählt ist.

7. Verfahren nach einem der Ansprüche 1 bis 6, **dadurch gekennzeichnet, daß** zwecks räumlicher Bündelung des Richtstrahls in zwei zueinander senkrechten Ebenen (xz, yz) in der Signalverarbeitungseinrichtung

a) das resultierende Ausgangssignal einer ersten Ebene (xz) nach der Gleichung

$$R_{HYPxz}(\gamma, n) = [(\, |\mathfrak{R}_L| + |\mathfrak{R}_R| \,)^n - |\mathfrak{R}_L - \mathfrak{R}_R|^n \,]^{1/n} \quad \text{gebildet wird;} \tag{9a}$$

b) das resultierende Ausgangssignal einer hierzu senkrecht stehenden zweiten Ebene (yz) nach der Gleichung

$$R_{HYPyz}(\gamma, m) = [(\, |\mathfrak{R}_H| + |\mathfrak{R}_V| \,)^m - |\mathfrak{R}_H - \mathfrak{R}_V|^m \,]^{1/m} \quad \text{gebildet wird;} \qquad \text{und} \tag{9b}$$

c) ein den Richtstrahl dreidimensional bündelndes Ausgangssignal ($R_{HYPxz,yz}$) durch Multiplikation oder Mittelwertbildung aus den resultierenden Ausgangssignalen ($R_{HYPxz}$, $R_{HYPyz}$) der beiden Ebenen gewonnen wird.

8. Vorrichtung zur Durchführung des Verfahrens nach Anspruch 2, **gekennzeichnet durch** folgende Merkmale:

a) an die Ausgänge jeder Wandlergruppe ($W_L$, $W_R$) ist eine Schaltung (SVL, SVR) zur Signalvorverarbeitung angeschlossen;

b) jeder Signalvorverarbeitungsschaltung ist ein erster bzw. zweiter Betragsbildner (BL, BR) nachgeschaltet;

c) die Ausgänge der beiden Signalvorverarbeitungsschaltungen (SVL, SVR) sind ferner mit den Eingängen eines ersten differenzbildenden Addierers (ADD) verbunden, welcher das vorverarbeitete Ausgangssignal der einen Wandlergruppe von dem der anderen Wandlergruppe subtrahiert;

d) dem ersten differenzbildenden Addierer (ADD) ist ein dritter Betragsbildner (BD) nachgeschaltet;

e) an die Ausgänge des ersten und des zweiten Betragsbildners (BL, BR) ist ein summenbildender Addierer (ADS) angeschlossen; und

f) an die Ausgänge des summenbildenden Addierers (ADS) und des dritten Betragsbildners (BD) ist ein das resultierende Ausgangssignal ($R_{HYP}$) bildender zweiter differenzbildender Addierer (ADR) angeschlossen.

**9.** Vorrichtung nach Anspruch 8 zur Durchführung des Verfahrens nach Anspruch 2 oder 3, **gekennzeichnet durch** folgende Merkmale:

a) zwischen die Ausgänge des summenbildenden Addierers (ADS) und des dritten Betragsbildners (BD) einerseits und die Eingänge des zweiten differenzbildenden Addierers (ADR) andererseits ist je ein Potenzierer (PS, PD) eingeschaltet; und
b) an den Ausgang des zweiten differenzbildenden Addierers ADR) ist ein das resultierende Ausgangssignal ($R_{HYP}$) liefernder dritter Potenzierer (PR) angeschlossen.

**10.** Vorrichtung nach Anspruch 8 oder 9 für die Verarbeitung der Ausgangssignale von zwei Wandlergruppen, die jeweils aus mehreren oder einer Vielzahl von Wandlerelement bestehen, **dadurch gekennzeichnet, daß** zwischen die Signalvorverarbeitungsschaltungen (SVL, SVR) einerseits und den ersten bzw. zweiten Betragsbildner (BL, BR) andererseits je ein Richtstrahlbildner (HL, HR) für die beiden Wandlergruppen eingeschaltet ist.

**11.** Vorrichtung nach Anspruch 10, **dadurch gekennzeichnet, daß** die Eingänge des ersten differenzbildenden Addierers (ADD) ebenfalls an die Ausgänge der beiden Richtstrahlbildner (HL, HR) angeschlossen sind.


**Claims**

**1.** A method for beam forming in direction finding systems with two identical groups ($W_L$, $W_R$) of transducers, each group comprising at least one transducer, where in an electronic signal processing device a summation signal on the one hand and a differential signal on the other hand are derived from the complex output signals ($\Re_L$, $\Re_R$) of the two groups of transducers and then are combined for generating a resulting output signal ($R_{HYP}$); **characterized in that** in said signal processing device

a) a complex differential signal ($\Re_D = \Re_L - \Re_R$) is derived from the complex output signals ($\Re_L$, $\Re_R$) of the two groups of transducers;
b) a magnitude summation signal ($R_{BSum}$) is formed from the absolute values ($|\Re_L|$, $|\Re_R|$) of said transducer group output signals in accordance with formula

$$R_{BSum} = a \cdot |\Re_L| + b \cdot |\Re_R| \quad \text{with } a + b = 2 ; \quad \text{and} \tag{7}$$

c) for generating said resulting output signal ($R_{HYP}$) the magnitude summation signal is divided by the magnitude ($|\Re_D|$) of said differential signal ($\Re_D$).

**2.** A method for beam forming in direction finding systems with two identical groups ($W_L$, $W_R$) of transducers, each group comprising at least one transducer, where in an electronic signal processing device a summation signal on the one hand and a differential signal on the other hand are derived from the complex output signals ($\Re_L$, $\Re_R$) of the two groups of transducers and then are combined for generating a resulting output signal ($R_{HYP}$); **characterized in that** in said signal processing device

a) a complex differential signal ($\Re_D = \Re_L - \Re_R$) is derived from the complex output signals ($\Re_L$, $\Re_R$) of the two groups of transducers;
b) a magnitude summation signal ($R_{BSum}$) is formed from the absolute values ($|\Re_L|$, $|\Re_R|$) of said transducer group output signals in accordance with formula

$$R_{BSum} = a \cdot |\Re_L| + b \cdot |\Re_R| \quad \text{with } a + b = 2 ; \quad \text{and} \tag{7}$$

c) that the derivation of said resulting output signal ($R_{HYP}$) is performed in accordance with formula

$$R_{HYP} = [ (R_{BSum})^n - |\Re_D|^n ]^{1/n} \quad \text{with } 0 < n < \infty . \tag{6}$$

**3.** The method of claim 2, **characterized in that** n is chosen n <2, preferably n = 1 or n = 1/2 or n = 1/3.

**4.** The method of claim 2, **characterized by** choosing $|\mathfrak{R}_L| \equiv |\mathfrak{R}_R|$.

**5.** The method of claim 1 or 2, **characterized by** choosing a = b = 1.

**6.** The method of claim 1 or 2, **characterized by** choosing a = 0 or b = 0.

**7.** The method according to one of the claims 1 to 6, **characterized in that** for achieving three-dimensional focussing of the directive beam in two orthogonal planes

a) the resulting output signal of a first plane (xz) is formed in accordance with formula

$$R_{HYP}\,xz\,(\gamma,n) \;=\; [\,(\,|\mathfrak{R}_L| + |\mathfrak{R}_R|\,)^n - |\mathfrak{R}_L - \mathfrak{R}_R|^n\,]^{1/n} \qquad\qquad (9a)$$

b) the resulting output signal of a second plane (yz), which is oriented orthogonally with respect to said first plane, is formed in accordance with formula

$$R_{HYP}\,yz\,(\gamma,m) \;=\; [\,(\,|\mathfrak{R}_H| + |\mathfrak{R}_V|\,)^m - |\mathfrak{R}_H - \mathfrak{R}_V|^m\,]^{1/m}\,; \;\; \text{and} \qquad\qquad (9b)$$

c) a final output signal ($R_{HYPxz,yz}$) focussing the directive beam three-dimensionally is derived by multiplication or by averaging from said resulting output signals ($R_{HYPxz}$, $R_{HYPyz}$) of said two planes.

**8.** A device for carrying out the method of claim 2, **characterized by** the following features:

a) a circuit (SVL, SVR) for signal pre-processing is connected to the output of each group of transducers ($W_L$, $W_R$);
b) a first and a second magnitude forming means ( BL, BR ), respectively, is connected to the output of each signal pre-processing circuit;
c) the outputs of the two signal pre-processing circuits (SVL, SVR) are further connected to the imputs of a first difference forming adder (ADD), which subtracts the the pre-processed output signal of one of the groups of transducers from the corresponding signal of the the other group of transducers;
d) a third magnitude forming means (BD) is connected to an output of said first difference forming adder (ADD);
e) a summing adder (ADS) is connected to the outputs of said first and second magnitude forming means (BL, BR); and
f) a second difference forming adder (ADR), providing said resulting output signal ($R_{HYP}$), is connected to the outputs of said summing adder (ADS) and of said third magnitude forming means (BD).

**9.** The device of claim 8 provided for carrying out the method of claim 2 or 3, **characterized by** the following features:

a) one exponentiator each (PS, PD) is connected between the output of said summing adder (ADS) and of said third magnitude forming means (BD) on the one hand and the inputs of said second difference forming adder (ADR) on the other hand; and
b) a third exponentiator (PR) providing said resulting output signal ($R_{HYP}$) is connected to the output of said second difference forming adder (ADR).

**10.** The device of claim 8 or 9 for processing the output signals of two groups of transducers, each group consisting of several or of a plurality of transducer elements, **characterized in that** one directive beam former (HL, HR) each for these two groups of transducers is connected between said signal pre-processing circuits (SVL, SVR) on the one hand and said first and second magnitude forming means (BL, BR) on the other hand.

**11.** The device of claim 10, **characterized in that** the inputs of said first difference forming adder (ADD) are also connected to the outputs of said directive beam formers (HL, HR).

**Revendications**

**1.** Procédé pour la formation de faisceaux orientés dans des installations de repérage comprenant deux groupes de convertisseurs identiques ($W_L$, $W_R$) qui comprennent chacun au moins un convertisseur, un signal de somme, d'une part, et un signal de différence, d'autre part, étant formés dans un dispositif électronique de traitement de signaux à partir des signaux de sortie complexes ($\mathfrak{R}_L$, $\mathfrak{R}_R$) des deux groupes de convertisseurs et étant associés l'un à l'autre pour en dériver un signal de sortie résultant ($R_{HYP}$), **caractérisé en ce que** dans le dispositif de traitement des signaux

a) un signal complexe de différence ($\mathfrak{R}_D = \mathfrak{R}_L - \mathfrak{R}_R$) est formé à partir des signaux complexes de sortie ($\mathfrak{R}_L$, $\mathfrak{R}_R$) des deux groupes de convertisseurs;

b) un signal de somme de valeurs absolues ($R_{BSum}$) est formé selon l'équation $R_{BSum} = a.|\mathfrak{R}_L| + b.|\mathfrak{R}_R|$, avec a + b = 2    (7)

à partir des valeurs absolues ($|\mathfrak{R}_L|$, $|\mathfrak{R}_R|$) des signaux complexes de sortie des groupes de convertisseurs, et

c) pour la formation du signal de sortie résultant ($R_{HYP}$), le signal de somme des valeurs absolues ($R_{BSum}$) est divisé par la valeur absolue ($|\mathfrak{R}_D|$) du signal de différence ($\mathfrak{R}_D$).

2. Procédé pour la formation de faisceaux orientés dans des installations de repérage comprenant deux groupes de convertisseurs identiques ($W_L$, $W_R$) qui comprennent chacun au moins un convertisseur, un signal de somme, d'une part, et un signal de différence, d'autre part, étant formés dans un dispositif électronique de traitement de signaux à partir des signaux de sortie complexes ($\mathfrak{R}_L$, $\mathfrak{R}_R$) des deux groupes de convertisseurs et étant associés l'un à l'autre pour en dériver un signal de sortie résultant ($R_{HYP}$), **caractérisé en ce que** dans le dispositif de traitement des signaux

a) un signal complexe de différence ($\mathfrak{R}_D = \mathfrak{R}_L - \mathfrak{R}_R$) est formé à partir des signaux complexes de sortie ($\mathfrak{R}_L$, $\mathfrak{R}_R$) des deux groupes de convertisseurs;

b) un signal de somme de valeurs absolues ($R_{BSum}$) est formé selon l'équation $R_{BSum} = a.|\mathfrak{R}_L| + b.|\mathfrak{R}_R|$, avec a + b = 2    (7)

à partir des valeurs absolues ($|\mathfrak{R}_L|$, $|\mathfrak{R}_R|$) des signaux complexes de sortie des groupes de convertisseurs, et

c) **en ce que** la détermination du signal de sortie résultant ($R_{HYP}$) est obtenue selon l'équation

$$R_{HYP} = [(R_{BSum})^n - |\mathfrak{R}_D|^n]^{1/n} \text{ avec } 0 < n < \infty \qquad (6).$$

3. Procédé selon la revendication 2, **caractérisé en ce que** n < 2, de préférence n = = 1, n = 1/2 ou n = 1/3.

4. Procédé selon la revendication 2, **caractérisé en ce que** $|\mathfrak{R}_L| \equiv |\mathfrak{R}_R|$.

5. Procédé selon la revendication 1 ou 2, **caractérisé en ce que** a = b = 1.

6. Procédé selon la revendication 1 ou 2, **caractérisé en ce que** a = 0 ou b = 0.

7. Procédé selon l'une des revendications 1 à 6, **caractérisé en ce que** pour la concentration spatiale du faisceau orienté dans deux plans (xz, yz) perpendiculaires l'un à l'autre, on forme dans le dispositif de traitement des signaux

a) le signal de sortie résultant dans un premier plan (xz) selon l'équation

$$R_{HYPxz}(\gamma, n) = [(|\mathfrak{R}_L| + |\mathfrak{R}_R|)^n - |\mathfrak{R}_L - \mathfrak{R}_R|^n]^{1/n} \qquad (9a)$$

b) le signal de sortie résultant dans un deuxième plan (yz) perpendiculaire au premier selon l'équation

$$R_{HYPyz}(\gamma, m) = [(|\mathfrak{R}_H| + |\mathfrak{R}_V|)^m - |\mathfrak{R}_H - \mathfrak{R}_V|^m]^{1/m} \qquad (9b)$$

et

c) un signal de sortie ($R_{HYPxz,yz}$) qui concentre le faisceau orienté dans trois dimensions par multiplication ou calcul de la valeur moyenne des signaux de sortie résultants ($R_{HYPxz}$, $R_{HYPyz}$) dans les deux plans.

**8.** Dispositif en vue de la mise en oeuvre du procédé selon la revendication 2, **caractérisé par** les caractéristiques suivantes:

a) un circuit de pré-traitement des signaux (SVL, SVR) est raccordé aux sorties de chaque groupe de convertisseurs ($W_L$, $W_R$);
b) un premier ou un deuxième dispositif respectif de formation de valeur absolue (BL, BR) est raccordé en aval de chaque circuit de pré-traitement de signaux;
c) les sorties des deux circuits de pré-traitement de signaux (SVL, SVR) sont en outre reliées aux entrées d'un premier additionneur (ADD) de formation de différences qui soustrait le signal de sortie pré-traité d'un groupe de convertisseurs de celui de l'autre groupe de convertisseurs;
d) un troisième dispositif de formation de valeur absolue (BD) est raccordé en aval du premier additionneur (ADD) de formation de différences;
e) un additionneur de formation de somme (ADS) est raccordé aux sorties du premier et du deuxième dispositif de formation de valeur absolue (BL, BR) ; et
f) un deuxième additionneur (ADR) de formation de différences qui forme le signal de sortie résultant ($R_{HYP}$) est raccordé aux sorties de l'additionneur de formation de somme (ADS) et du troisième dispositif de formation de valeur absolue (BD) .

**9.** Dispositif selon la revendication 8 en vue de la mise en oeuvre du procédé selon la revendication 2 ou 3, **caractérisé par** les caractéristiques suivantes:

a) un dispositif respectif de formation de puissance (PS, PD) est raccordé entre les sorties de l'additionneur de formation de somme (ADS) et du troisième dispositif de formation de valeur absolue (BD), d'une part, et les entrées du deuxième additionneur (ADR) de formation de différences, d'autre part; et
b) un troisième dispositif de formation de puissance (PR) qui délivre le signal de sortie résultant ($R_{HYP}$) est raccordé à la sortie du deuxième additionneur (ADR) de formation de différences.

**10.** Dispositif selon la revendication 8 ou 9 pour le traitement des signaux de sortie de deux groupes de convertisseurs qui sont chacun constitué de plusieurs ou d'une pluralité d'éléments de convertisseur, **caractérisé en ce qu'**un dispositif de formation d'un faisceau orienté (HL, HR) pour les deux groupes de convertisseurs est raccordé entre les circuits de pré-traitement des signaux (SVL, SUR), d'une part, et le premier ou selon le cas le deuxième dispositif de formation de valeur absolue (BL, BR), d'autre part.

**11.** Dispositif selon la revendication 10, **caractérisé en ce que** les entrées du premier additionneur (ADD) de formation de différences sont également raccordées aux sorties des deux dispositifs de formation de faisceaux orientés (HL, HR).

Fig. 1a

Fig. 1b

Fig. 2a

Fig. 2b

Fig. 2c

Fig. 2d

n = 4

Fig. 3a

$n = \dfrac{1}{2}$

Fig. 3b

$n = \dfrac{1}{3}$

Fig. 3c

Fig. 4

**Fig. 5**

Vorn

Y

$W_{LV}$    $W_{RV}$

Links    X    Rechts

$W_{LH}$    $W_{RH}$

Hinten

Fig. 6